# EUROPÄISCHE PATENTSCHRIFT

(11) **EP 3 505 226 B1**
(45) Veröffentlichungstag und Bekanntmachung des Hinweises auf die Patenterteilung: **04.05.2022**
(21) Anmeldenummer: 18211029.6
(22) Anmeldetag: 07.12.2018
(51) Int. Cl.: B01D 35/027, B01D 29/33, B01D 29/35, B60K 15/04

(54) **VORRICHTUNG ZUM FILTERN VON FLÜSSIGKEITEN**
DEVICE FOR FILTERING LIQUIDS
DISPOSITIF DE FILTRAGE DE LIQUIDES

(30) Priorität: 27.12.2017 DE 102017223795
(43) Veröffentlichungstag der Anmeldung: 03.07.2019
(73) Patentinhaber: Robert Bosch GmbH, 70442 Stuttgart (DE)
(72) Erfinder: Harrison, Alex, Bury St Edmunds, Suffolk IP33 3ZA (GB)

(56) Entgegenhaltungen:
- EP-A1- 1 724 145
- WO-A1-2005/041732
- WO-A1-2006/106283
- US-A- 1 512 065

## Beschreibung

### Stand der Technik

Es sind bereits Vorrichtungen zum Filtern von Flüssigkeiten bekannt. Derartige Vorrichtungen sind beispielsweise in bzw. an Einfüllöffnung von Tanks vorgesehen, um eine Verschmutzung des Tanks, insbesondere beim Befüllen des Tanks mit einem Fluid, z.B. mit Gras, Spänen oder Blättern, zu vermeiden. Beispielsweise können Kettensägen am Öl- oder Kraftstofftank oder mobile Druckreiniger an deren Wasservorratstank eine derartige Vorrichtung aufweisen. Beim Befüllen derartiger Tanks kommt es jedoch häufig zum unerwarteten Überlaufen der Flüssigkeit aus den vorgenannten Vorrichtungen.

Ferner sei auf die Druckschriften WO2006106283 A1 und WO2005/041732 A1 verwiesen.

### Offenbarung der Erfindung

Die Erfindung geht aus von einer Vorrichtung zum Filtern einer Flüssigkeit, mit den Merkmalen des Anspruchs 1. Der Boden ist vorteilhaft verschlossen, eine Ausleitung des zu filternden Fluids erfolgt zumindest auch radial (durch die umlaufende Wandung bzw. Ausnehmungen in der Wandung); kann aber zusätzlich auch axial, also durch den Boden erfolgen. Die Vorrichtung kann auch als Behältnis bezeichnet werden. Die Vorrichtung kann eine Becherform aufweisen. Sie kann aber auch eine eckige Grundform, beispielsweise eine quadratische aufweisen. Die Wände können vertikal oder schräg relativ zu einer Einfüllöffnung der Vorrichtung bzw. vertikal oder schräg nach oben verlaufen. Sofern die Wände schräg verlaufen weitet oder verjüngt sich die Vorrichtung, sprich die Projektionsfläche der Einfüllöffnung ist größer oder kleiner als die Projektionsfläche der Einfüllöffnung ist größer oder kleiner als die Projektionsfläche des Bodens. Die Wand kann bezeichnet werden als gebildet aus Stegen und unterbrochen durch Ausnehmungen. Der Austritt der zu filternden Flüssigkeiten erfolgt zumindest auch, insbesondere ausschließlich über die Ausnehmungen in der Wand, bzw. durch Ausnehmungen in der Mantelfläche. In einem Übergangsbereich zwischen dem Boden und der Wand und/oder im Bereich der Einfüllöffnung und/oder in einem mittleren Bereich zwischen dem Übergangsbereich und der Einfüllöffnung, ist die Wand bzw. die Mantelfläche der Vorrichtung umlaufend geschlossen. Die Vorrichtung wird durch die Einfüllöffnung befüllt. Das Fluid verlässt die Filtervorrichtung durch die in der seitlichen Wandung angeordneten Ausnehmungen bzw. Öffnungen. Die Stege bilden quasi ein grobes Gitter oder ein Netz des Filters. Die Rippen sind auf der Oberfläche des Bodens, bzw. auf der zum Behältnis oder zur Einfüllöffnung hin gewandten Seite des Bodens angeordnet. Die Rippen verlaufen ausgehend von der Mitte oder dem mittleren erhöhten Bereich des Bodens zum Übergangsbereich bzw. zur Wandung, also schräg nach unten. Die Höhe der Rippen kann variieren, insbesondere in einem Übergangsbereich zwischen dem Boden und der Wand bzw. zwischen dem Boden und den Stegen können die Rippen höher sein. Die Rippen sind auf der Innenseite der Vorrichtung (dem Behältnis bzw. der Vorrichtung hin zugewandten Seite) angeordnet. Sie können auch entlang der Stege in Richtung der Einfüllöffnung verlaufen. Insbesondere erstreckt sich jeweils eine Rippe durchgehend vom Boden über den Übergangsbereich und entlang eines Steges. Die Rippen sind auf der Oberfläche des Bodens angeordnet. Die Rippen sind auf der Innenseite der Vorrichtung angeordnet. Sie sind vom mittleren Bereich abfallend (hin zum Übergangsbereich zwischen Wand und Boden) orientiert. Die Höhe der Rippen kann zum Übergangsbereich hin zunehmen. Die Höhe kann im Bereich des Anfangs bzw. des Endes der Rippe abnehmen. Der Boden kann gewölbt, pyramidenförmig, kegelförmig, dreiecksförmig oder dergleichen ausgebildet sein. Sofern es sich um eine Runde insbesondere becherförmige Vorrichtung handelt ist er bevorzugt kegelförmig. Ein mittlerer Bereich ist gegenüber einem Übergangsbereich zwischen Boden und Wand erhöht.

Durch die Rippen am Boden der Vorrichtung wird ein auf den Boden auftreffender Fluidstrahl beim Befüllen der Vorrichtung in Richtung der seitlichen Ausnehmungen gelenkt. Ferner wird er durch die Rippen kanalisiert und/oder aufgeteilt. Dadurch entstehen beim befüllen bzw. Filtern weniger Verwirbelungen oder weniger Turbulenzen innerhalb der Vorrichtung.

Die Abflussmenge aus der Vorrichtung kann erhöht werden. Ein Überlaufen eines Befüllungsfluids aus der Einfüllöffnung wird vermieden. Zudem wird ein Herausspritzen des Fluids aus der Vorrichtung vermieden. Dadurch wird eine Befüllung und/oder Filterung eines Fluidtanks bedienerfreundlicher und/oder kann schneller erfolgen.

Dadurch, dass die Rippen derart angeordnet sind, dass sie sich zumindest teilweise entlang der Stege fortsetzten, kann Fluid, welches bei einer Befüllung der Vorrichtung zumindest auch teilweise auf die Wand bzw. die Stege und Öffnungen gerichtet ist kanalisiert bzw. gerichtet werden. Das verringert Turbulenzen oder Verwirbelungen. Ferner wird die Blasenbildung im Fluid reduziert. Die Durchlaufmenge des Fluids durch die Vorrichtung kann gesteigert werden. Zudem gewinnt die Vorrichtung an Steifigkeit und/oder Stabilität gegen Verformung, insbesondere radiale Quetschung.

Dadurch dass eine Anzahl der Rippen am Boden und/oder an den Stegen einer Anzahl der Stege entspricht, kann das Befüllungsfluid kanalisiert den einzelnen zwischen den Stegen angeordneten Ausnehmungen bzw. Auslauföffnungen zugeführt werden. Eine Ausleitung des Fluids aus der Vorrichtung erfolgt gezielt. Der Fluidstrahl trifft dadurch mit erhöhter Geschwindigkeit und/oder zielgerichtet auf die jeweilige Ausnehmung bzw. Öffnung. Ein Fluid bzw. Filterdurchsatz kann erhöht werden.

Es wird vorgeschlagen, dass die Vorrichtung becherförmig ist. Der Becher kann eine sich zur Einfüllöffnung konisch weitende Wand aufweisen. Der Boden des Bechers kann kegelförmig, insbesondere spitzkegelförmig gewölbt sein. Ein Winkel zwischen der Wandung und dem Boden kann spitz sein. Der Becher kann größere und kleinere Rippen aufweisen. Die größeren Rippen (höher und/oder länger) können sich von einem Bereich der Einfüllöffnung, entlang der Innenseite eines Steges, über den Übergangsbereich und den Boden, bis zur Mitte des Bodens, erstrecken. Die Vorrichtung kann eine Vielzahl solcher längeren und/oder höheren Rippen, beispielsweise drei oder vier oder eine andere Vielzahl aufweisen. Diese größeren Rippen und/oder auch die kleineren Rippen sind beispielsweise winkelsymmetrisch zueinander angeordnet. Die Rippen sind insbesondere radial sternförmig ausgehend von einem mittleren Bereich des Bechers angeordnet. Bei einer quadratischen oder einer rechteckförmigen Vorrichtung (bezogen zumindest auf die Projektionsfläche des Bodens, bzw. die durch Wandung oder Mantelfläche umrahmte Fläche), können die Rippen auf pyramidenförmigen oder auf dachförmigen Bodenflächen voneinander divergierend oder parallel zueinander angeordnet sein. Größere Rippen könnten hier beispielsweise durch die Ecken der eckigen Vorrichtung oder die Mitten der unterteilten Bodenflächen der Vorrichtung verlaufen.

Vorteilhaft ermöglicht eine derartige Vorrichtung eine homogene bzw. gleichbleibend hohe und/oder verwirbelungsfreie Durchströmung der Vorrichtung, unabhängig vom Auftreffpunkt des Fluidstrahls beim Befüllen der bzw. Filtern mit der Vorrichtung.

Außerdem wird vorgeschlagen, dass die Vorrichtung Haltemittel, insbesondere Rastelemente, Klemmmittel und/oder einen Kragen zur Fixierung in und/oder an einer Einfüllöffnung eines Flüssigkeitstanks aufweist. Damit kann ein Herausfallen der Vorrichtung aus dem Flüssigkeitstank vermieden werden. Die Vorrichtung lässt sich dadurch sicher positionieren.

Ferner wird vorgeschlagen, dass die Vorrichtung ein Sieb, insbesondere ein engmaschiges Sieb aufweist. Das Sieb, beispielweise aus Metall oder Kunststoff, kann auf der Außen- oder Innenseite der Wandung angeordnet sein oder innerhalb der Wandung, insbesondere umspritzt durch die Stege und/oder Wandung ausgebildet sein. Eine Öffnungs- bzw. Netzgröße des Siebes kann je nach Anwendung variieren. Das Sieb ist engmaschiger als die Ausnehmungen in der Wandung. Damit können die Filtereigenschaften variiert werden. Die Ausnehmungen der Vorrichtungen werden bezüglich der Auffanggröße für Partikel im Fluid auf die Öffnungen der Siebgröße reduziert. Die Vorrichtung kann aus Kunststoff, Metall, einem Verbundwerkstoff oder dergleichen hergestellt sein. Ferner geht die Erfindung aus von einem Flüssigkeitstank und/oder einem Gegenstand, einem Gerät oder einer Maschine beispielsweise einer Kettensäge oder einem Druckreiniger mit einem Flüssigkeitstank, aufweisend ein vorgenannte Vorrichtung. Diese kann beispielsweise in einem Einfüllstutzen des Tanks angeordnet sein. Es kann sich dabei um einen Wassertank, einen Öltank oder einen Kraftstofftank handeln. Bei einem Druckreiniger kann dadurch die Befüllzeit und/oder der Komfort (kein Überlaufen, kein Herausspritzen) beim Befüllen eines Wassertanks, verbessert werden. Bei einer Kettensäge kann Öl überlauffrei und Verdreckungssicher in den Öltank gefüllt werden. Bei einer Steinsäge kann ein Kühlwassertank rascher und/oder spritzfrei gefiltert befüllt werden.

### Zeichnung

Die Erfindung ist anhand von in den Zeichnungen dargestellten Ausführungsbeispielen in der nachfolgenden Beschreibung näher erläutert. Es zeigen:
- Fig. 1: eine perspektivische Ansicht einer Druckreinigungsvorrichtung mit einem Schlauchvorsatz,
- Fig. 2: die Druckreinigungsvorrichtung mit geöffnetem Fluidtankdeckel und einer erfindungsgemäßen Vorrichtung im Einfüllstutzen,
- Fig. 3: die erfindungsgemäße Vorrichtung in fünf Ansichten, einer Seitenansicht (mittig), einer seitlichen Schnittdarstellung A-A (links), einer Draufsicht in die Vorrichtung hinein (unten), einer perspektivischen Darstellung (rechts), einer perspektivischen Schnittdarstellung A-A (oben, rechts), und
- Fig. 4: eine Kettensäge als weiteres Ausführungsbeispiel.

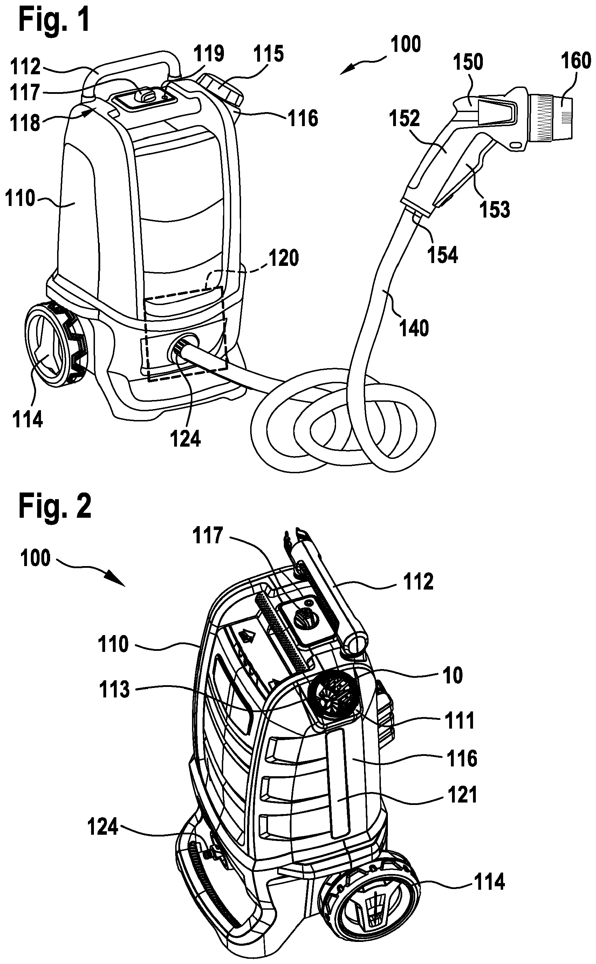

Fig. 1 zeigt eine beispielhaft als Druckreinigungsvorrichtung ausgebildete Reinigungsvorrichtung 100 mit einem Gehäuse 110. In dem Gehäuse 110 ist vorzugsweise eine Druckerzeugungseinheit 120 zur Druckbeaufschlagung eines Fluids angeordnet.

Gemäß einer Ausführungsform ist die Druckreinigungsvorrichtung 100 nach Art einer Niederdruckreinigungsvorrichtung ausgebildet, wobei die Druckerzeugungseinheit 120 zur Erzeugung eines maximalen Betriebsdrucks kleiner 25 bar, bevorzugt kleiner 20 bar und besonders bevorzugt kleiner 15 bar ausgebildet ist. Die Niederdruckreinigungsvorrichtung ist vorzugsweise ohne Düsenbeabstandungselement, insbesondere ohne Lanze, betreibbar. Alternativ hierzu, oder zusätzlich hierzu, kann die Druckreinigungsvorrichtung100 jedoch auch als Hochdruckreinigungsvorrichtung ausgebildet sein.

Eine derartige vorzugsweise multifunktionale Druckreinigungsvorrichtung 100 kann in den unterschiedlichsten Bereichen Anwendung finden, insbesondere bei leichten bis mittleren Reinigungsaufgaben, z.B. zur Reinigung von Gegenständen wie Fahrzeugen, z.B. Autos, Fahrrädern, insbesondere Mountainbikes, und/oder zur Reinigung von Spielsachen, insbesondere von Kinderspielsachen, und/oder zur Reinigung von Bekleidungsgegenständen, z.B. von Stiefeln, insbesondere von Gummistiefeln, und/oder zur Reinigung von Arbeitsgeräten, insbesondere Gartengeräten, wie z.B. Schaufeln, Spaten usw., und/oder zur Reinigung von Haustieren, z.B. von Pferden, Hunden oder dergleichen. Darüber hinaus kann die Druckreinigungsvorrichtung 100 auch im Garten, z.B. zum Gießen von Pflanzen, Anwendung finden und/oder beim Camping, z.B. als mobile Dusche, Anwendung finden. Es wird darauf hingewiesen, dass die beschriebenen Anwendungsmöglichkeiten lediglich beispielhaften Charakter haben und nicht als Einschränkung der Erfindung zu sehen sind, so kann die Druckreinigungsvorrichtung 100 auch bei beliebig anderen Anwendungen Verwendung finden.

Vorzugsweise weist die Druckerzeugungseinheit 120 einen nicht dargestellten Motor auf. Der Motor ist bevorzugt als Verbrennungsmotor und/oder Elektromotor ausgebildet. Im Fall eines Elektromotors kann zur netzunabhängigen Stromversorgung ein Akkupack vorgesehen sein und/oder zur netzabhängigen Stromversorgung kann eine Kabelanbindung vorgesehen sein. Bevorzugt ist der Motor als Elektromotor ausgebildet, dem ein Akkupack zugeordnet ist.

Des Weiteren weist die Druckreinigungsvorrichtung 100 vorzugsweise zumindest ein, illustrativ zwei Räder 114 zum Fortbewegen auf einem beliebigen Untergrund auf. Vorzugsweise sind die Räder 114 derart ausgebildet, dass eine Bewegung im Gelände, z.B. im Garten usw., möglich ist. Dabei ermöglichen die Räder 114 durch die vorzugsweise stabile Ausgestaltung einen sicheren Stand und somit einen sicheren Betrieb. Zum sicheren Greifen der Druckreinigungsvorrichtung 100 ist dem Gehäuse 110 vorzugsweise zumindest ein Handgriff 112 zugeordnet. Vorzugsweise ist der Handgriff 112 teleskopierbar.

Alternativ oder optional weist die Druckreinigungsvorrichtung 100 zumindest einen Tragegriff auf, der dazu ausgebildet ist, die Druckreinigungsvorrichtung 100 nach Art einer Tasche und/oder eines Rucksacks zu tragen.

Darüber hinaus weist die Druckreinigungsvorrichtung 100 bevorzugt zumindest einen Fluidtank 116 auf. Der Fluidtank 116 ist gemäß einer Ausführungsform fest mit dem Gehäuse 110 verbunden. Jedoch kann der Fluidtank 116 gemäß einer weiteren Ausführungsform vom Gehäuse 110 abnehmbar ausgebildet sein, sodass dieser z.B. zum Befüllen und/oder Reinigen vom Gehäuse 110 abnehmbar ist. Der Fluidtank 116 weist vorzugsweise ein Fassungsvermögen von 15l auf. Jedoch ist eine Ausgestaltung des Fluidtanks 116 mit einem Fassungsvermögen von 15l nicht als Einschränkung der Erfindung zu sehen. So kann das Fassungsvermögen des Fluidtanks 116 auch kleiner oder größer als 15l sein.

Bevorzugt weist die Druckreinigungsvorrichtung 100 eine Bedieneinheit 118 auf, die zumindest ein Ein/Aus-Bedienelement 119 aufweist, das zum Aktivieren und/oder Deaktivieren bzw. zum Ein- und/oder Ausschalten der Druckreinigungsvorrichtung 100 ausgebildet ist. Darüber hinaus kann die Bedieneinheit 118 auch z.B. zum Einstellen eines auswählbaren Betriebsmodus, eines Betriebsdrucks, einer Motordrehzahl und/oder eines beliebig anderen Parameters, insbesondere eines Antriebsparameters, ausgebildet sein. Hierzu weist die Bedieneinheit 118 bevorzugt eine Eingabeeinheit 117 auf, mittels der ein auswählbarer Betriebsmodus, ein Betriebsdruck, eine Motordrehzahl und/oder ein beliebiger anderer Parameter, insbesondere ein Antriebsparameter, einstellbar ist. Diese Eingabeeinheit 117 ist vorzugsweise nach Art eines Einstellrads, einer Tastatur und/oder eines Touchelements ausgebildet. Alternativ oder optional kann der Bedieneinheit 118 auch eine Anzeigevorrichtung zugeordnet sein, die im Gehäuse 110 integriert ist. Darüber hinaus kann die Bedieneinheit 118 alternativ oder optional auch extern ausgebildet sein, wobei z.B. eine Bedienung der Druckreinigungsvorrichtung 100 über ein Smartphone, Tablet oder dergleichen erfolgen kann.

Des Weiteren ist die Druckreinigungsvorrichtung 100 zur regelbaren Abgabe des druckbeaufschlagten Fluids bevorzugt über einen Schlauch 140 mit einem Schlauchvorsatz 150 verbindbar. Der Schlauch 140 ist dabei einem maximal möglichen Betriebsdruck der Druckreinigungsvorrichtung 100 angepasst. Dabei kann der Schlauch 140 vorzugsweise nach Art eines Hochdruckschlauchs für eine Hochdruckreinigungsvorrichtung ausgebildet sein und/oder bevorzugt nach Art eines Niederdruckschlauchs, z.B. eines Gartenschlauchs, für eine Niederdruckreinigungsvorrichtung ausgebildet sein. Der Schlauch 140 kann dabei manuell am Gehäuse 110 aufgewickelt werden oder vorzugsweise über eine automatische Aufwickelvorrichtung aufwickelbar sein. Darüber hinaus kann der Schlauch 140 auch nach Art eines Spiralschlauches ausgebildet sein. Dabei kann ein der Druckreinigungsvorrichtung 100 zugewandtes Ende des Schlauchs 140 fest mit der Druckreinigungsvorrichtung 100 verbunden sein oder lösbar an der Druckreinigungsvorrichtung 100 angeordnet sein. Illustrativ ist der Schlauch 140 lösbar an einem Kopplungselement 124 der Druckreinigungsvorrichtung 100 angeordnet. Des Weiteren kann analog hierzu der Schlauchvorsatz 150 fest mit dem Schlauch 140 verbunden sein oder vorzugsweise lösbar über ein Kopplungsteil 154 mit diesem verbunden sein.

Gemäß einer Ausführungsform weist der Schlauchvorsatz 150 ein Gehäuse 152, eine Vorrichtung 160 zum Einstellen von zumindest zwei unterschiedlichen Fluidstrahlarten und/oder ein Bedienelement 153 zum Aktivieren einer Fluidabgabe auf. Bevorzugt ist der Schlauchvorsatz 150 nach Art einer Handpistole ausgebildet, wobei das Gehäuse 152 pistolenförmig ausgebildet ist. Es wird jedoch darauf hingewiesen, dass die Ausgestaltung des Schlauchvorsatzes 150 nach Art einer Handpistole lediglich beispielhaften Charakter hat und nicht als Einschränkung der Erfindung zu sehen ist. So kann der Schlauchvorsatz 150 auch ein rohrförmiges Gehäuse 152 aufweisen und/oder als Reinigungsspritze ausgebildet sein. Es wird darauf hingewiesen, dass eine derartige Reinigungsspritze, bevorzugt direkt an einem vorzugsweise als Gartenschlauch ausgebildeten Schlauch 140, Anwendung findet. Dabei ist bei einer Anwendung mit einer Reinigungsspritze nicht zwingend eine Druckerzeugungsvorrichtung 100 zur Druckbeaufschlagung des Fluids erforderlich.

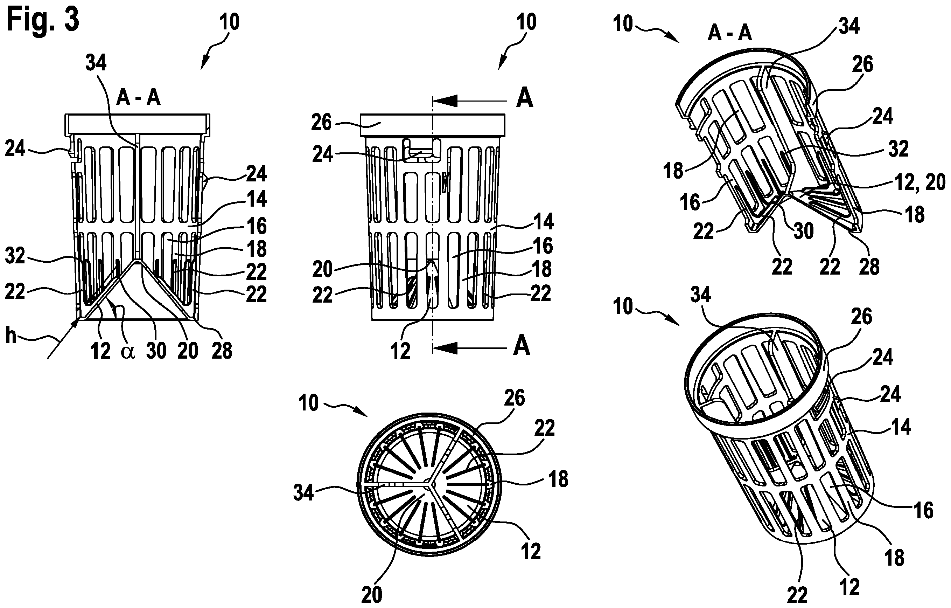

Dem Fluidtank 116 (vgl. Fig. 2) kann über eine nicht dargestellte Fluidquelle, z.B. einen Wasserhahn, einen Schlauch, eine Gießkanne oder, insbesondere sofern der Fluidtank 116 abnehmbar ausgeführt ist, durch Tauchen in einen See oder Bach, Fluid zugeführt werden. Dazu weist der Fluidtank einen Einfüllstutzen 111 auf. Der Einfüllstutzen 111 kann durch den Deckel 115 (vgl. Fig. 1) verschlossen werden. Dazu weisen der Deckel 115 und der Einfüllstutzten 111 beispielsweise ein korrespondierendes Gewinde 113 auf. Am oder besser gesagt im Einfüllstutzen 111 ist eine Vorrichtung 10 zum Filter der einzufüllenden Flüssigkeit (hier Wasser) fixiert (Details siehe Fig. 3). Die Vorrichtung 10 ist über einen Kragen 26 und/oder Haltemittel beispielsweise in Form von Rast- oder Klemmmitteln 24 und/oder einer Rastnase 24, am Fluidtank 116 fixierbar ausgebildet. Hier ist beispielhaft die Vorrichtung 10 schräg bezogen auf eine vertikale Ausrichtung der Druckreinigungsvorrichtung 100 bzw. des Fluidtanks 116 ausgerichtet, wodurch ein leichtes und gut sichtbares Befüllen des Fluidtanks 116 möglich ist. Der Fulidtank 116 kann eine Füllstandsanzeige 121 hier in Form einer transparenten Tankwandung aufweisen.

Fig. 3 zeigt die Vorrichtung 10 zum Filtern einer Flüssigkeit in den vorgenannten 5 Ansichten. Die Vorrichtung 10 könnte als becherförmig bezeichnet werden, dessen perforierte Wand sich konisch weitet. Die vorgenannten Haltemittel sind als Rastarme bzw. Rastnase 24, als Kragen 26 und als Vorsprung 24 ausgeführt. Damit kann die Vorrichtung beispielsweise in einem Einfüllstutzen fixiert werden. Andere Halte- oder Fixiervorrichtung sind ebenso denkbar. Die Vorrichtung 10 weist einen mittig erhöhten Boden 12 auf. Der Boden 12 ist spitzkegelförmig ausgebildet. Des Kegels Spitze bildet hier beispielhaft die mittige Erhöhung 20. Bezogen auf eine ebene Aufstellfläche weist der Kegel einen Winkel a von rund 50° auf, kann aber auch einen beliebigen anderen spitzen Winkel bezogen auf eine gedachte ebene Aufstellfläche aufweisen. Vorteilhaft ist dieser Winkel a jedoch in einem Bereich zwischen 10° und 80°, um ein zügiges Abführen des zu filternden Fluids aus der Mitte, bzw. ein zügiges Zuführen des Fluids zu den Ausnehmungen 16, zu gewährleisten. Die Vorrichtung 10 weist ferner eine umlaufende Wand 14 mit Ausnehmungen 16 und Stegen 18 auf. Die umlaufende Wand 14 ist sozusagen durch die Ausnehmungen 16 durchbrochen und übrig bleiben die Stege 18. Durch die Ausnehmungen 16 kann ein zu filterndes Fluid insbesondere radial nach außen abfließen. Die Stege 18 stellen sozusagen eine erste Gitterstruktur der Vorrichtung 10 zum Filtern dar. Ferner kann, umspritzt von den Stegen 18 und/oder innerhalb der Wandung 14 und durch die Ausnehmungen 16 verlaufend, ein feinmaschigeres Netz oder feinmaschigeres Sieb angeordnet sein (hier der Übersichtlichkeit halber nicht dargestellt). Ebenso kann dieses Sieb oder Netz auch auf der Innen- oder Außenseite der Wandung bzw. Stege fixiert sein. Es wird vorgeschlagen, dass der Boden ausgehend von der mittigen Erhöhung 20 mehrere Rippen aufweist. Die Rippen 22 sind sternförmig, im Wesentlichen ausgehend von der mittleren Erhöhung 20 radial verlaufend hin zur Wandung 14 bzw. hin zu den Stegen 18 angeordnet. Es sind gleich viele Rippen 22 wie Stege 18 vorgesehen. Die Stege 18 und Rippen 22 sind winkelsymmetrisch angeordnet. Die Rippen 22 treffen im Bereich des Übergangs 28 von dem Boden 12 und der Wand 14 mittig auf die Stege 18. Das zu filternde Fluid wird durch die Rippen 22 aufgeteilt und kanalisiert den Ausnehmungen 16 bzw. den Öffnungen zugeführt. Durch den gewölbten bzw. kegelförmigen Boden 12 fließt das Fluid radial, sozusagen entlang der beplankten Schrägfläche, rasch ab. Die Rippen 22 weisen ausgehend von einem Anfang 30 und/oder Ende 32 eine zunehmende Höhe h auf. Die Höhe h ist im Übergangsbereich zwischen Boden 12 und Wandung 14 bzw. Boden 12 und Stegen 18 am höchsten. Dadurch wird ein Überschwappen des Fluids über die Rippen 22 erschwert. Ferner sind drei größere Rippen 34 jeweils 120° versetzt zueinander angeordnet. Diese größeren Rippen 22 erstrecken sich vom Zentrum bzw. der mittleren Erhöhung 20 des Bodens 12, zu jeweils einem Steg 18 und über die gesamte Länge des Steges 18 bis zum Kragen 26 bzw. der Einfüllöffnung der Vorrichtung 10. Diese Rippen 34 sind höher ausgebildet. Sie stabilisieren die Vorrichtung 10 gegen Verformung. Ferner dritteln sie sozusagen zumindest einen Teil des Volumens der Vorrichtung 10. Insgesamt weist die Vorrichtung drei große Rippen 34 und zwischen den großen Rippen 34 jeweils fünf kleine Rippen 22 auf. Die Wandung 14 der Vorrichtung 10 ist auf mittlerer Höhe zwischen Übergangsbereich 28 und Kragen 26 zum Zwecke der Filtergrößeneinstellung und/oder zur Stabilisierung bzw. Versteifung und/oder dergleichen umlaufend geschlossen. Zwischen der geschlossenen Wand 14 und dem Kragen 26 einerseits sowie dem Übergangsbereich 28 andererseits sind jeweils im Wesentlichen rechteckförmig die Ausnehmungen 16 angeordnet, welche sich zwischen den Stegen 18 erstrecken.

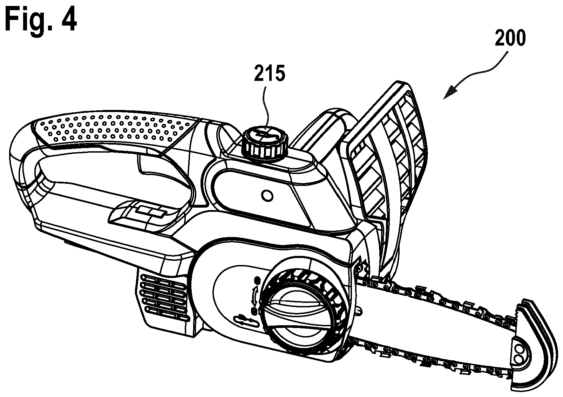

Fig. 4 zeigt eine Kettensäge 200 mit einem Öltank (nicht dargestellt) dessen Einfüllstutzen von einem Deckel 215 verschlossen ist. Beispielhaft kann auch hier die Erfindungsgemäße Vorrichtung 10 eingesetzt werden. Ebenso kann die Vorrichtung 10 auch in anderen Gegenständen oder Maschinen Verwendung finden, beispielsweise in einer wassergekühlten Kreissäge im Straßenbau oder dergleichen.

## Patentansprüche

1. Vorrichtung (10) zum Filtern einer Flüssigkeit, aufweisend einen mittig erhöhten Boden (12) und eine umlaufende Wand (14) mit Ausnehmungen (16) und Stegen (18) zum gefilterten Ausleiten einer Flüssigkeit, wobei der Boden (12) insbesondere ausgehend von der mittigen Erhöhung (20) mehrere zu den Stegen (18) verlaufende Rippen (22) aufweist, **dadurch gekennzeichnet, dass** die Rippen (22) derart angeordnet sind, dass sie sich zumindest teilweise entlang der Stege (18) fortsetzten und/oder dass eine Anzahl der Rippen (22) einer Anzahl der Stege (18) entspricht.

2. Vorrichtung (10) nach Anspruch 1, **dadurch gekennzeichnet, dass** die Rippen sternförmig angeordnet sind.

3. Vorrichtung (10) nach einem der vorhergehenden Ansprüche, **dadurch gekennzeichnet, dass** die Vorrichtung (10) ein Sieb aufweist.

4. Vorrichtung (10) nach einem der vorhergehenden Ansprüche, **dadurch gekennzeichnet, dass** die Vorrichtung (10) becherförmig ist.

5. Vorrichtung (10) nach einem der vorhergehenden Ansprüche, **dadurch gekennzeichnet, dass** die Vorrichtung (10) Haltemittel, insbesondere Rastelemente (24) und/oder einen Kragen (26) zur Fixierung in und/oder an einer Einfüllöffnung (111) eines Flüssigkeitstanks (116) aufweist.

6. Flüssigkeitstank (116) oder Gerät, insbesondere Druckreiniger (100) oder Kettensäge (200) mit einem Flüssigkeitstank (116), aufweisend ein Vorrichtung (10) nach einem der vorhergehenden Ansprüche.

## Claims

1. Device (10) for filtering a liquid, having a centrally elevated base (12) and having a peripheral wall (14) with cutouts (16) and webs (18) for filtered discharge of a liquid, wherein the base (12) has, in particular proceeding from the central elevation (20), multiple ribs (22) which extend to the webs (18), **characterized in that** the ribs (22) are arranged in such a way that they at least partially continue along the webs (18), and/or **in that** a number of ribs (22) corresponds to a number of webs (18).

2. Device (10) according to Claim 1, **characterized in that** the ribs are arranged in a star-like manner.

3. Device (10) according to either of the preceding claims, **characterized in that** the device (10) has a screen.

4. Device (10) according to one of the preceding claims, **characterized in that** the device (10) is of cup-shaped form.

5. Device (10) according to one of the preceding claims, **characterized in that** the device (10) has retaining means, in particular latching elements (24) and/or a collar (26), for fixing in and/or on a filling opening (111) of a liquid tank (116).

6. Liquid tank (116) or unit, in particular pressure cleaner (100) or chainsaw (200), with a liquid tank (116), having a device (10) according to one of the preceding claims.

## Revendications

1. Dispositif (10) de filtration d'un liquide, ledit dispositif comportant un fond (12) surélevé au centre et une paroi périphérique (14) pourvue d'évidements (16) et de barrettes (18) destinés à l'évacuation filtrée d'un liquide, le fond (12) comportant notamment à partir de l'élévation centrale (20) une pluralité de nervures (22) s'étendant en direction des barrettes (18), **caractérisé en ce que** les nervures (22) sont disposées de manière à se prolonger au moins partiellement le long des barrettes (18) et/ou de manière à ce qu'un nombre de nervures (22) corresponde à un nombre de barrettes (18).

2. Dispositif (10) selon la revendication 1, **caractérisé en ce que** les nervures sont disposées en étoile.

3. Dispositif (10) selon l'une des revendications précédentes, **caractérisé en ce que** le dispositif (10) comporte un tamis.

4. Dispositif (10) selon l'une des revendications précédentes, **caractérisé en ce que** le dispositif (10) est en forme de coupelle.

5. Dispositif (10) selon l'une des revendications précédentes, **caractérisé en ce que** le dispositif (10) comporte des moyens de retenue, notamment des éléments d'encliquetage (24) et/ou une collerette (26) de fixation dans et/ou sur une ouverture de remplissage (111) d'un réservoir de liquide (116).

6. Réservoir de liquide (116) ou appareil, notamment nettoyeur sous pression (100) ou scie à chaîne (200) à réservoir de liquide (116), comportant un dispositif (10) selon l'une des revendications précédentes.
